(19) Europäisches Patentamt
European Patent Office
Office européen des brevets

(11) **EP 3 175 310 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **15741203.2**

(22) Anmeldetag: **23.07.2015**

(51) Int Cl.:
**G05D 1/02** (2020.01)

(86) Internationale Anmeldenummer:
**PCT/EP2015/066894**

(87) Internationale Veröffentlichungsnummer:
**WO 2016/016089 (04.02.2016 Gazette 2016/05)**

(54) **FAHRERLOSES TRANSPORTFAHRZEUG UND VERFAHREN ZUM BETREIBEN EINES FAHRERLOSEN TRANSPORTFAHRZEUGS**

DRIVERLESS TRANSPORT VEHICLE AND METHOD FOR OPERATING A DRIVERLESS TRANSPORT VEHICLE

VÉHICULE DE TRANSPORT SANS CONDUCTEUR, ET PROCÉDÉ PERMETTANT DE FAIRE FONCTIONNER UN VÉHICULE DE TRANSPORT SANS CONDUCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.07.2014 DE 102014214889**

(43) Veröffentlichungstag der Anmeldung:
**07.06.2017 Patentblatt 2017/23**

(73) Patentinhaber: **KUKA Deutschland GmbH**
**86165 Augsburg (DE)**

(72) Erfinder:
• **PFAFF, Patrick**
  **86163 Augsburg (DE)**

• **KLEIN, Bjoern**
  **86165 Friedberg (DE)**

(74) Vertreter: **Böss, Dieter Alexander et al**
**Schirmgasse 268**
**84028 Landshut (DE)**

(56) Entgegenhaltungen:
EP-A1- 0 788 044    DE-A1-102010 012 750
US-A1- 2008 199 298

• ROLAND STAHN ET AL: "Laser Scanner-Based Navigation for Commercial Vehicles", INTELLIGENT VEHICLES SYMPOSIUM, 2007 IEEE, IEEE, PI, 1 June 2007 (2007-06-01), pages 969-974, XP031127072, ISBN: 978-1-4244-1067-5

## Beschreibung

Die Erfindung betrifft ein fahrerloses Transportfahrzeug und ein Verfahren zum Betreiben eines fahrerlosen Transportfahrzeugs.

Ein fahrerloses Transportfahrzeug (Englisch: Automated Guided Vehicle (AGV)) ist ein flurgebundenes Fördermittel mit einem eigenen Antrieb, das automatisch gesteuert und berührungslos geführt wird. Fahrerlose Transportfahrzeuge können insbesondere automatisch eine Zielposition relativ zu einem Objekt anfahren.

Die US 2008/0199298 A1 offenbart eine Last mittels eines fahrerlosen Transportfahrzeugs aufzunehmen und das fahrerlose Transportfahrzeug automatisch zu einem Punkt A zu bewegen.

Die DE 10 2010 012 750 A1 offenbart ein Verfahren zum Betreiben eines holonomen/omnidirektionalen Flurförderfahrzeugs. Es wird ein Pfad für die Bewegung des Flurförderfahrzeugs von einem Startpunkt zu einem Endpunkt ermittelt. Der Pfad wird mittels Splines modelliert, basierend auf dem modellierten Pfad wird eine Bahnkurve für die Bewegung des Flurförderfahrzeugs entlang des Pfades mit einem ermittelten Geschwindigkeitsprofil ermittelt, es wird eine weitere Bahnkurve ermittelt, auf der sich das Flurförderfahrzeug vom Startpunkt zum Endpunkt bewegen soll, basierend auf der Bahnkurve und einer iterativen Optimierungsvorschrift, und schließlich wird das Flurförderfahrzeugs entlang der weiteren Bahnkurve insbesondere mittels einer Regelvorrichtung des Flurförderfahrzeugs bewegt.

Die Veröffentlichung ROLAND STAHN ET AL: "Laser Scanner-Based Navigation for Commercial Vehicles", INTELLIGENT VEHICLES SYMPOSIUM, 2007 beschreibt ein auf Laser-Scannern beruhendes Navigationssystem für Lastkraftwagen, mittels dem ein Zugfahrzeug autonom unter einen aufzunehmenden Auflieger rangiert werden kann. Das Navigationssystem steuert dabei die Lenkung des Zugfahrzeugs, die Höchstgeschwindigkeit und die Bremsen. Eine den automatischen Vorgang überwachende Person bestätigt die ordnungsgemäße Ausführung durch das automatische Navigationssystem über das Gaspedal.

Aufgabe der Erfindung ist es, Voraussetzungen dafür zu schaffen, dass ein fahrerloses Transportfahrzeug genauer eine vorgegebene Zielposition relativ zu einem Objekt automatisch anzufahren vermag.

Die Aufgabe der Erfindung wird gelöst durch ein Verfahren zum Betreiben eines fahrerlosen Transportfahrzeugs, welches automatisch eine Zielposition relativ zu einem Objekt anfahren soll, wobei das Objekt zwei charakteristische Merkmale aufweist und die Zielposition auf der Verbindungslinie zwischen den beiden charakteristischen Merkmalen oder beabstandet um einen Abstand von dieser Verbindungslinie liegt, aufweisend folgende Verfahrensschritte:

    a) Bewegen des fahrerlosen Transportfahrzeugs an eine Position, an der das fahrerlose Transportfahrzeug mittels einer Abstandsmessvorrichtung des fahrerlosen Transportfahrzeugs einen ersten Abstand zwischen der aktuellen Position des fahrerlosen Transportfahrzeugs und dem ersten charakteristischen Merkmal und einen zweiten Abstand zwischen der aktuellen Position des fahrerlosen Transportfahrzeugs und dem zweiten charakteristischen Merkmal zu bestimmen vermag,

    b) mittels der Abstandsmessvorrichtung, Ermitteln des ersten Abstands und des zweiten Abstands, danach

    c) automatisches Fahren des fahrerlosen Transportfahrzeugs für eine vorbestimmte erste Zeitdauer mit einer translatorischen Bewegung, der eine erste rotatorische Bewegung überlagert ist, wobei die Richtung der rotatorischen Bewegung von dem ersten Abstand und dem zweiten Abstand abhängt,

    d) nach dem Ende der ersten Zeitdauer, automatisches Fahren des fahrerlosen Transportfahrzeugs für eine vorbestimmte zweite Zeitdauer mit der translatorischen Bewegung, der eine zweite rotatorische Bewegung überlagert ist, deren Richtung umgekehrt zur ersten rotatorischen Bewegung ausgerichtet ist, und

    e) Wiederholen der Schritte b) bis d) solange, bis eine Abbruchbedingung erfüllt ist, bei welcher als Abbruchkriterium die Längen des ersten Abstands und des zweiten Abstands auf einem Kreis mit dem Radius r um den Mittelpunkt M des fahrerlosen Transportfahrzeugs und durch den Mittelpunkt der Abstandsmessvorrichtung definiert sind, wobei das fahrerlose Transportfahrzeug automatisch stoppt, wenn die Kreisgleichung

$$\mathrm{r2} \;=\; \mathrm{x}^2 \;+\; \mathrm{y}^2$$

für einen ersten Soll-Versatz $x = x_{offset,soll}$ und einen zweiten Soll-Versatz $y = y_{offset,soll}$ erfüllt ist, wobei der erste Soll-Versatz ein maximal zulässiger Versatz des fahrerlosen Transportfahrzeugs zur Zielposition parallel zur Verbindungslinie und der zweite Soll-Versatz ein maximal zulässiger Versatz des fahrerlosen Transportfahrzeugs zur Zielposition rechtwinklig zur Verbindungslinie darstellt.

Ein weiterer Aspekt der Erfindung betrifft ein fahrerloses Transportfahrzeug, aufweisend einen Fahrzeuggrundkörper, am Fahrzeuggrundkörper angeordnete Räder, von denen wenigstens einem der Räder ein Antrieb zugeordnet ist, eine Abstandsmessvorrichtung und eine mit der Abstandsmessvorrichtung und dem Antrieb verbundene Steuervorrichtung, die eingerichtet ist, das erfindungsgemäße Verfahren durchzuführen. Der Antrieb ist vorzugsweise ein elektrischer Antrieb, insbesondere ein geregelter elektrische Antrieb.

Das fahrerlose Transportfahrzeug kann beispielsweise als ein holonomes bzw. omnidirektionales fahrerloses Transportfahrzeug ausgebildet sein. In diesem Fall umfasst das fahrerlose Transportfahrzeug omnidirektionale Räder, vorzugsweise sogenannte Mecanum-Räder, deren Antriebe von der Steuervorrichtung angesteuert werden.

Die beiden charakteristischen Merkmale können auch als eine erste charakteristische Merkmalsgruppe und als eine zweite charakteristische Merkmalsgruppe ausgeführt sein, die vorzugsweise symmetrisch sind.

Das fahrerlose Transportfahrzeug wird vorzugsweise an die Position bewegt, indem es diese automatisch anfährt. Dies erfolgt z.B. mittels einer z.B. in der Steuervorrichtung gespeicherten Information über eine Lookup-Position, von welcher das fahrerlose Transportfahrzeug die beiden charakteristischen Merkmale mittels der Abstandsmessvorrichtung zu erkennen vermag. Die Lookup-Position bzw. Position wird z.B. mit einem Planer automatisch angefahren.

Die Abstandsmessvorrichtung ist vorzugsweise als ein Laserscanner ausgeführt.

Damit das fahrerlose Transportfahrzeug die Zielposition gegebenenfalls auch mit einer vorgegebenen Orientierung an der Zielposition automatisch anfährt, werden zunächst mittels der Abstandsmessvorrichtung die beiden Abstände ermittelt, d.h. die Abstände zwischen der aktuellen Position des fahrerlosen Transportfahrzeugs zu den beiden charakteristischen Merkmalen des Objekts. Diese Abstände sind vorzugsweise Abstände zwischen der Abstandsmessvorrichtung und den charakteristischen Merkmalen.

Die Zielposition wiederum liegt auf der die beiden charakteristischen Merkmalen verbindenden Verbindungslinie, also zwischen den beiden charakteristischen Merkmalen, oder beabstandet zur Verbindungslinie.

Um der Zielposition zumindest näher zu kommen, fährt daraufhin automatisch das fahrerlose Transportfahrzeug, insbesondere gesteuert durch seine Steuervorrichtung, für die vorbestimmte erste Zeitdauer mit der translatorischen Bewegung, der die erste rotatorische Bewegung überlagert ist. Das fahrerlose Transportfahrzeug fährt also einen Bogen. Die Richtung der ersten rotatorischen Bewegung hängt von dem ersten Abstand und dem zweiten Abstand ab, insbesondere von der Differenz zwischen diesen beiden Abständen.

Nachdem die erste Zeitdauer verstrichen ist, fährt das fahrerlose Transportfahrzeug für die zweite Zeitdauer weiter, wobei jedoch die Richtung rotatorischen Bewegung umgekehrt wird.

Nach Beenden der zweiten Zeitdauer werden wieder die beiden Abstände ermittelt, d.h. die Abstände zwischen der aktuellen Position des fahrerlosen Transportfahrzeugs und der beiden charakteristischen Merkmale, und das fahrerlose Transportfahrzeug fährt weiter mit der translatorischen Bewegung, der die neu ermittelten rotatorischen Bewegungen überlagert sind, bis das Abbruchkriterium erreicht ist. Das Abbruchkriterium ist derart gewählt, dass das fahrerlose Transportfahrzeug die Zielposition mit genügend kleiner Toleranz erreicht, gegebenenfalls auch mit einer genügend genauen Orientierung relativ zum Objekt.

Die erste Zeitdauer und die zweite Zeitdauer können vorzugsweise gleich lang sein. Die Geschwindigkeit der tanslatorischen Bewegung kann konstant sein. Vorzugsweise kann der Abstand zwischen der Zielposition und dem ersten charakteristischen Merkmal gleich dem Abstand zwischen der Zielposition und dem zweiten charakteristischen Merkmal sein.

Nach einer Variante des erfindungsgemäßen Verfahrens wird ein erster Versatz der aktuellen Position des fahrerlosen Transportfahrzeugs zur Zielposition in Richtung der Verbindungslinie ermittelt. Die Richtung der ersten rotatorischen Bewegung erfolgt dann in Abhängigkeit des ermittelten ersten Versatzes derart, dass diese in Richtung der Zielposition gerichtet ist. Ist beispielsweise das fahrerlose Fahrzeug an der aktuellen Position nach links relativ zur Zielposition versetzt, so wird als Richtung für die erste rotatorische Bewegung ein Richtung nach rechts gewählt, das fahrerlose Transportfahrzeug fährt somit zunächst eine Kurve im Uhrzeigersinn.

Die Geschwindigkeit der ersten rotatorischen Bewegung und/oder die Geschwindigkeit der zweiten rotatorischen Bewegung kann vorzugsweise von der Größe des ersten Versatzes und /oder des Abstands des fahrerlosen Transportfahrzeugs zur Verbindungslinie abhängen. Insbesondere kann es vorgesehen sein, dass die Geschwindigkeit der ersten rotatorischen Bewegung größer ist, je größer der erste Versatz und/oder je größer der Abstand des fahrerlosen Transportfahrzeugs zur Verbindungslinie ist. Die Geschwindigkeiten beider rotatorischen Bewegungen können gleich sein.

Die Geschwindigkeit der ersten rotatorischen Bewegung und/oder der zweiten rotatorischen Bewegung kann auch von der Orientierung des fahrerlosen Transportfahrzeugs an der aktuellen Position relativ zur Zielposition abhängen.

Gemäß einer bevorzugten Ausführungsform des erfindungsgemäßen Verfahrens ist das Abbruchkriterium durch die Längen des ersten Abstands und des zweiten Abstands auf einem Kreis mit dem Radius r um den Mittelpunkt des fahrerlosen Transportfahrzeugs und durch den Mittelpunkt der Abstandsmessvorrichtung definiert, wobei das fahrerlose Transportfahrzeug automatisch stoppt, wenn die Kreisgleichung

$$r^2 = x^2 + y^2$$

für einen ersten Soll-Versatz $x=x_{offset,soll}$ und einen zweiten Soll-Versatz $y=y_{offset,soll}$ erfüllt ist. Der erste Soll-Versatz ist ein maximal zulässiger Versatz des fahrerlosen Transportfahrzeugs zur Zielposition parallel zur Verbindungslinie und der zweite Soll-Versatz ein maximal zulässiger Versatz des fahrerlosen Transportfahrzeugs zur Zielposition rechtwinklig zur Verbindungslinie. Dadurch kann auch erreicht werden, dass das fahrerlose Transportfahrzeug eine gewünschte Orientierung mit genügend kleiner Abweichung relativ zum Objekt an der Zielposition einnimmt.

Gemäß einer Variante des erfindungsgemäßen Verfahrens ist das Objekt als ein Lastanhänger ausgeführt, welcher eine Aufnahmevorrichtung umfasst, welche vorgesehen ist, mit einer Gegenaufnahmevorrichtung des fahrerlosen Transportfahrzeugs lösbar verbunden zu werden. Der Lastanhänger umfasst insbesondere zwei in Längsrichtung des Lastanhängers ausgerichtete vertikale Streben, deren der Aufnahmevorrichtung zugewandte Kanten die beiden charakteristischen Merkmale bilden. Die Position der Aufnahmevorrichtung ist insbesondere der Zielposition zugeordnet. Gemäß dieser Variante ist es möglich, dass das fahrerlose Transportfahrzeug derart automatisch an den Lastanhänger heranfährt, so dass dieses die Aufnahmevorrichtung des Lastanhängers automatisch kontaktieren kann. Somit kann das fahrerlose Transportfahrzeug die beiden vorderen Kanten mittels seiner Abstandsmessvorrichtung erfassen, um basierend auf den Abständen zwischen dem fahrerlosen Transportfahrzeug, insbesondere dessen Abstandsmessvorrichtung, und den beiden vorderen Kanten die Richtungen der beiden rotatorischen Bewegungen zu ermitteln.

Somit betrifft ein weiterer Aspekt der Erfindung eine Fahrzeuganordnung, aufweisend ein fahrerloses Transportfahrzeug und einen Lastanhänger. Das fahrerlose Transportfahrzeug umfasst einen Fahrzeuggrundkörper, am Fahrzeuggrundkörper angeordnete Räder, von denen wenigstens einem der Räder ein Antrieb zugeordnet ist, eine Abstandsmessvorrichtung und eine mit der Abstandsmessvorrichtung und dem Antrieb verbundene Steuervorrichtung, die eingerichtet ist, das erfindungsgemäße Verfahren durchzuführen. Der Lastanhänger umfasst eine Aufnahmevorrichtung, welche vorgesehen ist, mit einer Gegenaufnahmevorrichtung des fahrerlosen Transportfahrzeugs lösbar verbunden zu werden, wobei der Lastanhänger insbesondere zwei in Längsrichtung des Lastanhängers ausgerichtete vertikale Streben aufweist, deren der Aufnahmevorrichtung zugewandten Kanten die beiden charakteristischen Merkmale bilden.

Der Lastanhänger kann auch zwei Gruppen von Füße oder Streben aufweisen, die vorzugsweise in Längsrichtung des Lastanhängers ausgerichtet sind. Die der Aufnahmevorrichtung zugewandten Kanten der Streben bzw. die der Aufnahmevorrichtung zugewandten Seiten der Füße bilden die beiden charakteristischen Merkmalsgruppen.

Die Aufnahmevorrichtung des Lastanhängers ist vorzugsweise mittig zu den beiden charakteristischen Merkmalen bzw. den beiden charakteristischen Merkmalsgruppen ausgerichtet.

Gemäß einer weiteren bevorzugten Ausführungsform des erfindungsgemäßen Verfahrens ist das Objekt als ein Autoklav, allgemein als ein Raum, ausgebildet. Der Autoklav bzw. der Raum umfasst eine Rückwand, eine erste Seitenwand und eine zur ersten Seitenwand parallele zweite Seitenwand. Die Rückwand ist rechtwinklig zu den Seitenwänden ausgerichtet, die erste Seitenwand und die Rückwand bilden eine erste hintere Ecke und die zweite Seitenwand und die Rückwand bilden eine zweite hintere Ecke, die der Rückwand abgewandten vorderen Kanten der beiden Seitenwände bilden eine Öffnung des Autoklavs, durch die das fahrerlose Transportfahrzeug automatisch in den Autoklav bzw. in den Raum hinein fährt, wobei die beiden hinteren Ecken die beiden charakteristischen Merkmale bilden. Aufgrund dieser Variante kann das fahrerlose Transportfahrzeug automatisch durch die Öffnung in den Autoklav bzw. den Raum hinein fahren, um diesen z.B. zu bestücken.

Ein weiterer Aspekt der Erfindung betrifft demnach eine Bestückungsvorrichtung mit einem Autoklav, aufweisend ein fahrerloses Transportfahrzeug und den Autoklav. Das fahrerlose Transportfahrzeug umfasst einen Fahrzeuggrundkörper, am Fahrzeuggrundkörper angeordnete Räder, von denen wenigstens einem der Räder ein Antrieb zugeordnet ist, eine Abstandsmessvorrichtung und eine mit der Abstandsmessvorrichtung und dem Antrieb verbundene Steuervorrichtung, die eingerichtet ist, das erfindungsgemäße Verfahren durchzuführen. Der Autoklav umfasst eine Rückwand, eine erste Seitenwand und eine zur ersten Seitenwand parallele zweite Seitenwand, wobei die Rückwand rechtwinklig zu den Seitenwänden ausgerichtet ist, die erste Seitenwand und die Rückwand eine erste hintere Ecke und die zweite Seitenwand und die Rückwand eine zweite hintere Ecke bilden, die der Rückwand abgewandten vorderen Kanten der beiden Seitenwände eine Öffnung des Autoklavs bilden, durch die das fahrerlose Transportfahrzeug automatisch in den Autoklav hinein fährt und die beiden hinteren Ecken die beiden charakteristischen Merkmale bilden.

Ausführungsbeispiele der Erfindung sind exemplarisch in den beigefügten schematischen Figuren dargestellt. Es zeigen:

Fig. 1   eine Seitenansicht eines fahrerlosen Transportfahrzeugs mit einem Ladungsanhänger,

Fig. 2   eine Draufsicht des fahrerlosen Transportfahrzeugs und eines Teils des Ladungsanhängers,

Fig. 3   eine eine Bewegung des fahrerlosen Transportfahrzeugs veranschaulichende Grafik,

Fig. 4   ein das automatische Fahren des fahrerlosen Transportfahrzeugs beschreibendes Flussdiagram, und

Fig. 5    eine Draufsicht eines weiteren fahrerlosen Transportfahrzeugs und eines Autoklavs.

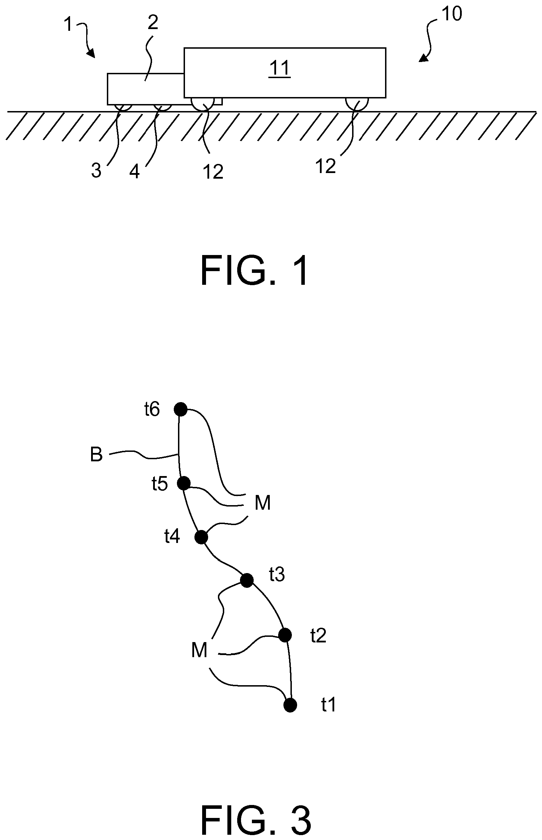

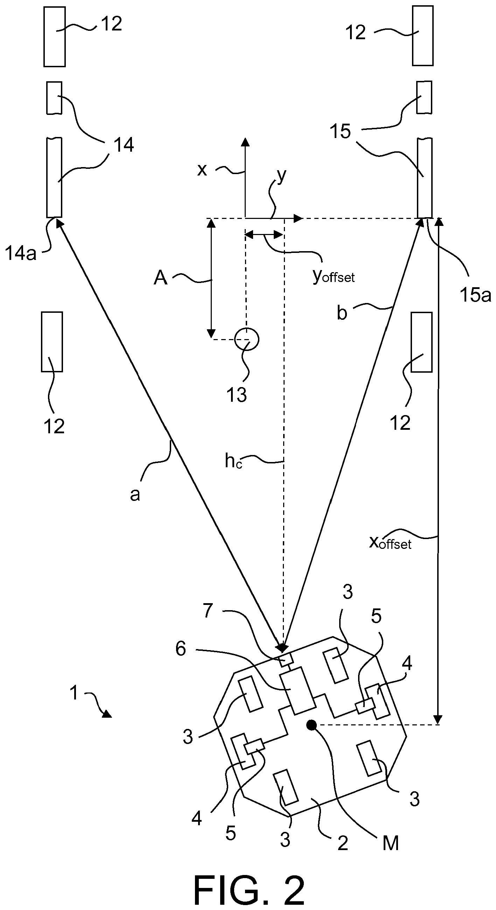

Die Fig. 1 zeigt eine Seitenansicht eines fahrerlosen Transportfahrzeugs 1, welcher einen Lastanhänger 10 zieht. Die Fig. 2 zeigt eine Draufsicht des fahrerlosen Transportfahrzeugs 1 und einen Teil des Lastanhängers 10.

Im Falle des vorliegenden Ausführungsbeispiels umfasst das fahrerlose Transportfahrzeug 1 einen Fahrzeuggrundkörper 2 und mehrere Räder 3, welche am Fahrzeuggrundkörper 2 mittels nicht näher dargestellten Aufhängungen befestigt sind.

Des Weiteren umfasst im Falle des vorliegenden Ausführungsbeispiels das fahrerlose Transportfahrzeug 1 zwei weitere Räder 4, welche jeweils mit einem eigenen Antrieb 5 angetrieben werden können. Die weiteren Räder 4 sind mittels nicht näher gezeigten Aufhängungen am Fahrzeuggrundkörper 2 befestigt. Die Antriebe 5 sind insbesondere elektrische Antriebe, vorzugsweise geregelte elektrische Antriebe. Die Achsen der weiteren Räder 4 sind auf einer gemeinsamen Linie angeordnet, welche durch den Mittelpunkt M des fahrerlosen Transportfahrzeugs 1 verläuft.

Das fahrerlose Transportfahrzeug 1 weist ferner eine z.B. am Fahrzeuggrundkörper 2 angeordnete Steuervorrichtung 6 auf, die mit den Antrieben 5 verbunden ist, um diese für eine automatische Bewegung des fahrerlosen Transportfahrzeugs 1 anzusteuern. Dazu läuft z.B. auf der Steuervorrichtung 6 ein geeignetes Rechnerprogramm. Insbesondere ist es vorgesehen, dass die beiden Antriebe 5 individuell angetrieben werden können, wodurch es möglich ist, dass das fahrerlose Transportfahrzeug 1 nicht nur geradeaus fahren kann, sondern dieser translatorischen Bewegung auch eine rotatorische Bewegung überlagern kann. Insbesondere ist das fahrerlose Transportfahrzeug 1 derart ausgeführt, dass es um seinen Mittelpunkt M auf der Stelle drehen kann.

Das fahrerlose Transportfahrzeug 1 umfasst ferner eine mit der Steuervorrichtung 6 verbundene Abstandsmessvorrichtung 7, welche z.B. als ein Laserscanner ausgeführt ist. Die Abstandsmessvorrichtung 7 ist z.B. am Fahrzeuggrundkörper 2 angeordnet und ist eingerichtet, den Abstand des fahrerlosen Transportfahrzeugs 1 zu einem Objekt zu ermitteln. Die von der Abstandsmessvorrichtung 7 erzeugten Signale werden der Steuervorrichtung 6 übermittelt, wodurch dieser eine Information über den besagten Abstand vorliegt.

Der Lastanhänger 10 umfasst im Falle des vorliegenden Ausführungsbeispiels einen Grundkörper 11, an dem mehrere Räder 12 z.B. mittels nicht näher dargestellter Aufhängungen befestigt sind. Ferner weist der Lastanhänger 10 eine Aufnahmevorrichtung 13 auf, welche vorgesehen ist, mit einer nicht näher dargestellten Gegenaufnahmevorrichtung des fahrerlosen Transportfahrzeugs 1 lösbar verbunden zu werden, sodass das fahrerlose Transportfahrzeug 1 den Lastanhänger 10 zu ziehen vermag, wenn die Gegenaufnahmevorrichtung mit der Aufnahmevorrichtung 13 verbunden ist. Die Gegenaufnahmevorrichtung umfasst z.B. eine mittels der Steuervorrichtung 6 ansteuerbare Hubvorrichtung, sodass das fahrerlose Transportfahrzeug 1, wenn entsprechend positioniert, die Gegenaufnahmevorrichtung mit der Aufnahmevorrichtung 13 verbinden kann.

Im Falle des vorliegenden Ausführungsbeispiels weist der Lastanhänger 10 eine erste vertikale Strebe 14 und eine zweite vertikale Strebe 15 auf, deren vordere Kanten (erste vordere Kante 14a der ersten vertikalen Strebe 14 und zweite vordere Kante 15 der zweiten vertikalen Strebe 15) der Aufnahmevorrichtung 13 zugewandt sind und, wenn sich das fahrerlose Transportfahrzeug 1 vor dem Lastanhänger 10 befindet, von der Abstandsmessvorrichtung 7 erfasst werden kann.

Die beiden vertikalen Streben 14, 15 verlaufen in Längsrichtung (x-Richtung) des Lastanhängers 10, also von vorne nach hinten. Die beiden vertikalen Streben 14, 15 sind insbesondere zwischen den Rädern 12 angeordnet.

Die Aufnahmevorrichtung 13 ist in Querrichtung (y-Richtung) des Lastanhängers 10 mittig angeordnet. Die beiden vorderen Kanten 14a, 15a befinden sich auf derselben Höhe bezüglich der Längsrichtung des fahrerlosen Transportfahrzeugs 1. Die Aufnahmevorrichtung 13 ist im Falle des vorliegenden Ausführungsbeispiels relativ zur Verbindungslinie der beiden vorderen Kannten 14a, 15a nach vorne um einen Abstand A versetzt.

Befindet sich das fahrerlose Transportfahrzeug 1 vor dem Lastanhänger 10 genügend nahe, dann ist es möglich, mittels der Abstandsmessvorrichtung 7 einen ersten Abstand a und einen zweiten Abstand b zu ermitteln. Der erste Abstand a ist der Abstand zwischen dem fahrerlosen Transportfahrzeug 1 und der ersten vorderen Kante 14a bzw. zwischen der Abstandsmessvorrichtung 7 und der ersten vorderen Kante 14a. Der zweite Abstand b ist der Abstand zwischen dem fahrerlosen Transportfahrzeug 1 und der zweiten vorderen Kante 15a bzw. zwischen der Abstandsmessvorrichtung 7 und der zweiten vorderen Kante 15a.

Im Falle des vorliegenden Ausführungsbeispiels ist es vorgesehen, dass das fahrerlose Transportfahrzeug 1 automatisch derart an den Lastanhänger 10 heran fährt, dass das fahrerlose Transportfahrzeug 1 mit der Aufnahmevorrichtung 13 des Lastanhängers 10 verbunden werden kann, insbesondere dass das fahrerlose Transportfahrzeug 1 automatisch sich mit der Aufnahmevorrichtung 13 zu verbinden vermag. Das fahrerlose Transportfahrzeug 1 ist also derart ausgeführt, dass es automatisch an eine vorbestimmte Zielposition relativ zum Lastanhänger 10 fährt und insbesondere an dieser Zielposition auch eine vorbestimmte Orientierung zum Lastanhänger 10 einnimmt. Der Position der Aufnahmevorrichtung 13 ist diese Zielposition zugeordnet. Dies erfolgt im Falle des vorliegenden Ausführungsbeispiels wie folgt:

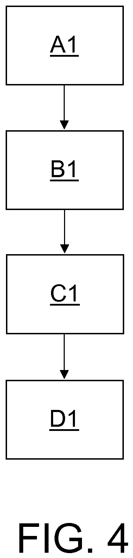

Zunächst wird das fahrerlose Transportfahrzeug 1 in die Nähe des Lastanhängers 10 bewegt, indem es vorzugsweise automatisch eine vorbestimmte Position anfährt, Schritt A1 eines in der Fig. 4 gezeigten Flussdiagramms. Diese Position fährt das fahrerlose Transportfahrzeug 1 z.B. mittels eines auf der Steuervorrichtung 6 konfigurierten Planers an. Die vorbestimmte Position ist derart gewählt, dass das fahrerlose Transportfahrzeug 1 mittels seiner Abstandsmessvorrichtung 7 zwei charakteristische Merkmale des Lastanhängers 10 erkennen kann. Die beiden charakteristischen Merkmale sind im Falle des vorliegenden Ausführungsbeispiels die beiden vorderen Kannten 14a, 15a.

An der Position angekommen, sucht automatisch das fahrerlose Transportfahrzeug 1 mittels seiner Abstandsvorrichtung 7 die beiden charakteristischen Merkmale, im Falle des vorliegenden Ausführungsbeispiels also die beiden vorderen Kannten 14a, 15a der beiden vertikalen Streben 14, 15, und bestimmt den ersten Abstand a und den zweiten Abstand b, also die Abstände zu den beiden Kannten 14, 15, Schritt B1 des Flussdiagramms der Fig. 4. Dadurch kann auch der Abstand $h_c$ des fahrerlosen Transportfahrzeugs 1 zur Verbindungslinie der beiden vorderen Kanten 14a, 14b ermittelt werden.

Im Falle des vorliegenden Ausführungsbeispiels ist die Abstandvorrichtung 7 als Laserscanner ausgeführt, der einen nicht näher gezeigten, dem Fachmann aber im Prinzip bekannten Lasterstrahl aussendet. Für die Berechnung der beiden Abstände a, b werden im Falle des vorliegenden Ausführungsbeispiels, von links bzw. von rechts kommend, die zwei innersten erkannten Laserstrahlen verwendet.

Aufgrund des ersten Abstands a, des zweiten Abstands b und des Abstands zwischen den beiden vorderen Kanten 14a, 15a wird es im Falle des vorliegenden Ausführungsbeispiels der Steuervorrichtung 7 ermöglicht, den Versatz $x_{offset}$ in x-Richtung und den Versatz $y_{offset}$ in y-Richtung der aktuellen Position des fahrerlosen Transportfahrzeugs 1 relativ zur gewünschten Zielposition zu ermitteln, Schritt C1 des Flussdiagramms der Fig. 4.

Anhand der Längenunterschiede des ersten Abstands a und des zweiten Abstands b ermittelt nun die Steuervorrichtung 7 die einzunehmende Fahrtrichtung, welche das fahrerlose Transportfahrzeug 1 einnehmen soll, um die Zielposition zu erreichen. Dabei wird im Falle des vorliegenden Ausführungsbeispiels einer Geradeausbewegung des fahrerlosen Transportfahrzeugs 1 (translatorische Bewegung) eine erste rotatorische Bewegung überlagert, Schritt D1 des Flussdiagramms der Fig. 4. Die Größe des eben genannten Längenunterschieds bestimmt dabei, welches Ausmaß die erste rotatorische Bewegung annehmen soll.

Im Falle des vorliegenden Ausführungsbeispiels wird die erste rotatorische Bewegung nach einer vorbestimmten Zeitdauer ins Gegenteil verkehrt, d.h. die Richtung der rotatorischen Bewegung wird geändert, um insbesondere das fahrerlose Transportfahrzeug 1 möglichst schnell auf eine Ausrichtung zentriert unter den Lastanhänger 10 zu bringen und gleichzeitig ein Aufschwingen der Bewegung zu verhindern. Dadurch fährt das fahrerlose Transportfahrzeug 1 mit einer zweiten rotatorischen Bewegung insbesondere für eine zweite Zeitdauer weiter. Dies ist in der Fig. 3 veranschaulicht.

Im Falle des vorliegenden Ausführungsbeispiels weist die translatorische Bewegung des fahrerlosen Transportfahrzeugs 1 eine konstante Geschwindigkeit $v_{trans}$ auf. Die Geschwindigkeit $v_{rot}$ der rotatorischen Bewegung hängt im Falle des vorliegenden Ausführungsbeispiels vom Abstand $h_c$ des fahrerlosen Transportfahrzeugs 1 zur Verbindungslinie der beiden vorderen Kanten 14a, 14b und von dem Versatz $y_{offset}$ in y-Richtung der aktuellen Position des fahrerlosen Transportfahrzeugs 1 relativ zur gewünschten Zielposition. Insbesondere ist die Geschwindigkeit $v_{rot}$ der ersten rotatorischen Bewegung um so größer, je größer der Abstand $h_c$ des fahrerlosen Transportfahrzeugs 1 zur Verbindungslinie der beiden vorderen Kanten 14a, 14b und je größer der Versatz $y_{offset}$ in y-Richtung der aktuellen Position des fahrerlosen Transportfahrzeugs 1 relativ zur gewünschten Zielposition ist. Die Anfangsrichtung der ersten rotatorischen Bewegung hängt vom aktuellen Versatz $y_{offset}$ in y-Richtung der aktuellen Position des fahrerlosen Transportfahrzeugs 1 relativ zur gewünschten Zielposition und gegebenenfalls auch von der aktuellen Orientierung des fahrerlosen Transportfahrzeugs 1 ab. Insbesondere ist es vorgesehen, dass das fahrerlose Transportfahrzeug 1 sich zunächst mit der überlagerten ersten rotatorischen Bewegung gegen den Uhrzeigersinn bewegt, wenn in Blickrichtung zum Lastanhänger 10 sich das fahrerlose Transportfahrzeug 1 rechts versetzt in y-Richtung zur Zielposition befindet. Anderenfalls bewegt sich das fahrerlose Transportfahrzeug 1 zunächst mit der überlagerten ersten rotatorischen Bewegung gegen den Uhrzeigersinn.

Der Lastanhänger 10 kann auch z.B. auch zwei Gruppen von Füße oder Streben aufweisen, die vorzugsweise in Längsrichtung des Lastanhängers 10 ausgerichtet sind. Die der Aufnahmevorrichtung 13 zugewandten Kanten der Streben bzw. die der Aufnahmevorrichtung 13 zugewandten Seiten der Füße bilden dann zwei charakteristischen Merkmalsgruppen als charakteristische Merkmale.

Die Fig. 3 veranschaulicht die automatische Bewegung des fahrerlosen Transportfahrzeugs 1. Die Fig. 3 zeigt den Mittelpunkt M des fahrerlosen Transportfahrzeugs 1 zu verschiedenen Zeiten t1 bis t6 und die Bahn B, entlang der das fahrerlose Transportfahrzeug 1 automatisch fährt.

Zum Zeitpunkt t1 befindet sich das fahrerlose Transportfahrzeug 1 an seiner aktuellen Position und berechnet wie obenstehend beschrieben die Geschwindigkeit $v_{rot}$ und die Richtung der ersten rotatorischen Bewegung. Im Falle des vorliegenden Ausführungsbeispiels fährt daraufhin das fahrerlose Transportfahrzeug 1 mit einer rotatorischen Bewegung gegen den Uhrzeigersinn für eine vorgegebene, konstante erste Zeitdauer bis zum Zeitpunkt t3. Zum Zeitpunkt t3 wird die Richtung der rotatorischen Bewegung umgekehrt und das fahrerlose Transportfahrzeug 1 fährt automatisch bis zum Zeitpunkt t6.

Im Falle des vorliegenden Ausführungsbeispiels ist es vorgesehen, dass die Zeitdauern, während der das fahrerlose Transportfahrzeug 1 in die beiden Richtungen fährt gleich sind. Die Geschwindigkeiten $v_{rot}$ der rotatorischen Bewegungen sind insbesondere unterschiedlich und hängen vom aktuellen Abstand $h_c$ des fahrerlosen Transportfahrzeugs 1 zur Verbindungslinie der beiden vorderen Kanten 14a, 14b und von dem Versatz $y_{offset}$ in y-Richtung der aktuellen Position des fahrerlosen Transportfahrzeugs 1 relativ zur gewünschten Zielposition ab.

An der Position, an der sich das fahrerlose Transportfahrzeug 1 zum Zeitpunkt t6 befindet, sucht automatisch das fahrerlose Transportfahrzeug 1 mittels seiner Abstandsvorrichtung 7 wieder die beiden charakteristischen Merkmale und wiederholt die Schritte B1 bis D1 solange, bis ein vorgegebenes Abbruchkriterium erreicht ist, d.h. bis das fahrerlose Transportfahrzeug 1 die Zielposition genügend genau erreicht hat.

An der geometrisch ermittelten Zielposition soll sich das fahrerlose Transportfahrzeug 1 so unter dem Lastanhänger 10 befinden, dass die Gegenaufnahmevorrichtung, die beispielsweise als eine ausfahrende Hubvorrichtung ausgebildet ist, die dazugehörige Aufnahmevorrichtung 13 des Lastanhängers 10 trifft. Dabei kann je nach vorheriger Bewegung das fahrerlose Transportfahrzeug 1 durchaus leicht gedreht unter dem Lastanhänger 10 stehen. Als Abbruchkriterium wird im Falle des vorliegenden Ausführungsbeispiels die Lage der Laserstrahlen, d.h. die Längen des ersten Abstands a und des zweiten Abstands b auf einem Kreis mit dem Radius r um den Mittelpunkt M des fahrerlosen Transportfahrzeugs 1 und durch den Mittelpunkt des Laserscanners bzw. der Abstandsmessvorrichtung 7 definiert. Das fahrerlose Transportfahrzeug 1 stoppt, wenn die Kreisgleichung $r^2 = x^2 + y^2$ erfüllt ist für einen Soll-Versatz $x=x_{offset,soll}$ in x-Richtung und einem Soll-Versatz $y=y_{offset,soll}$ in y-Richtung.

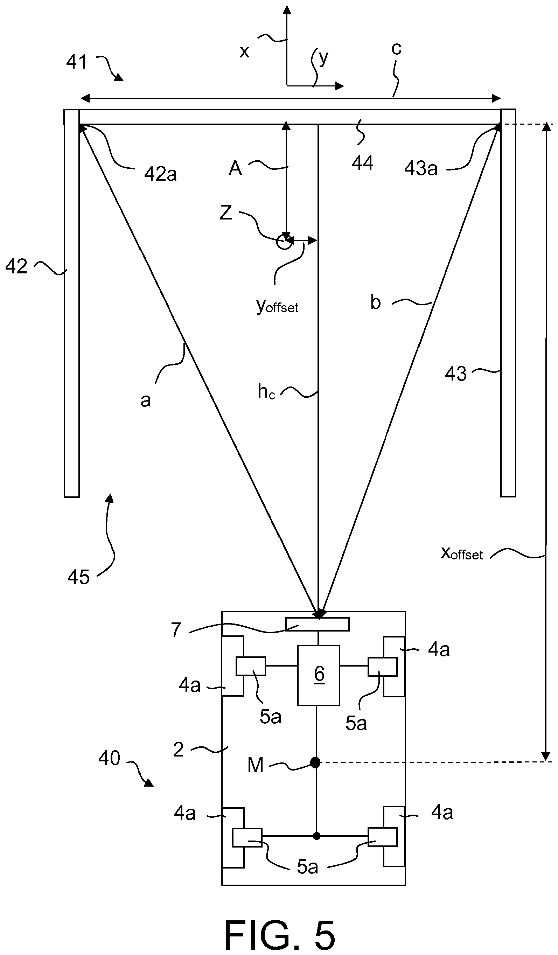

Die Fig. 5 zeigt in einer Draufsicht ein weiteres fahrerloses Transportfahrzeug 40, welches z.B. anstelle des in den Figuren 1 und 2 gezeigten fahrerlosen Transportfahrzeug 1 verwendet werden kann. Wenn nicht anders beschrieben, dann sind Bestandteile des in der Fig. 5 gezeigten fahrerlosen Transportfahrzeugs 40, die mit Bestandteilen des in den Figuren 1 und 2 gezeigten fahrerlosen Transportfahrzeugs 1 im Wesentlichen bau- und funktionsgleich sind, mit denselben Bezugzeichen versehen.

Das in der Fig. 5 gezeigte fahrerlose Transportfahrzeug 40 unterscheidet sich im Wesentlichen von dem in den Figuren 1 und 2 gezeigten fahrerlosen Transportfahrzeug 1 dadurch, dass es als ein omnidirektional bewegbares bzw. holonomes fahrerloses Transportfahrzeug 40 ausgebildet ist.

Anstelle der Räder 3 und der weiteren Räder 4 weist im Falle des vorliegenden Ausführungsbeispiels das fahrerlose Transportfahrzeug 40 mehrere, am Fahrzeuggrundkörper 2 z.B. mittels nicht näher dargestellten Radaufhängungen befestigte omnidirektionale Räder 4a auf, die auch als Mecanum-Räder bezeichnet werden. Solche Räder umfassen beispielsweise eine drehbar gelagerte Felge, an der mehrere Rollkörper antriebslos gelagert sind. Die Felge kann mit einem Antrieb angetrieben werden. Im Falle des vorliegenden Ausführungsbeispiels werden die Räder 4a mit jeweils einem elektrischen Antrieb 5a angetrieben. Diese sind vorzugsweise geregelte elektrische Antriebe und sind mit der Steuervorrichtung 6 verbunden.

Wie bereits erwähnt, kann das in der Fig. 5 gezeigte fahrerlose Transportfahrzeug 40 anstelle des in den Figuren 1 und 2 gezeigte fahrerlose Transportfahrzeug 1 verwendet werden. Im Falle des vorliegenden Ausführungsbeispiels ist es jedoch vorgesehen, dass das fahrerlose Transportfahrzeug 40 einen ebenfalls in der Fig. 5 gezeigten Autoklav 41 bestückt. Der Autoklav 41 ist ein Bespiel eines Raumes, in den das fahrerlose Transportfahrzeug 40 automatisch hinein fahren soll. Auch für diese Anwendung kann das in den Figuren 1 und 2 gezeigte fahrerlose Transportfahrzeug 1 verwendet werden.

Im Falle des vorliegenden Ausführungsbeispiels umfasst der Autoklav 41 eine Rückwand 44, eine erste Seitenwand 42 und eine zweite Seitenwand 43. Die erste Seitenwand 42 und die Rückwand 44 bilden eine erste hintere Ecke 42a und die zweite Seitenwand 43 und die Rückwand 44 bilden eine zweite hintere Ecke 43a. Die der Rückwand 44 abgewandten vordere Kanten der beiden Seitenwände 42, 43 begrenzen eine Öffnung 45 des Autoklavs 41, die durch ein nicht dargestelltes Türblatt oder eine nichtdargestellte Rolltür geöffnet und geschlossen werden kann. Der Autoklav 40 umfasst ferner eine nicht dargestellte Decke, die ebenfalls die Öffnung 45 nach vorne begrenzt.

Wenn sich das fahrerlose Transportfahrzeug 41 vor dem Autoklav 41 bzw. vor dessen Öffnung 45 befindet, dann kann die Abstandsmessvorrichtung 7 die beiden hinteren Ecken 42a, 3a erfassen.

Die beiden Seitenwände 42, 43 verlaufen in Längsrichtung (x-Richtung) und die Rückwand 44 verläuft in Querrichtung (y-Richtung). Die beiden Seitenwände 42, 43 sind parallel zueinander und rechtwinklig bezüglich der Rückwand 44 ausgerichtet. Die beiden Seitenwände 42, 43 erstrecken sich über dieselbe Tiefe, d. h. sind in x-Richtung genauso lang.

Befindet sich das fahrerlose Transportfahrzeug 41 vor der Öffnung 45 des Autoklavs 41, dann ist es möglich, mittels der Abstandsmessvorrichtung 7 einen ersten Abstand a und einen zweiten Abstand b zu ermitteln. Der erste Abstand a ist der Abstand zwischen dem fahrerlosen Transportfahrzeug 40 und der ersten hinteren Ecke 42a bzw. zwischen der Abstandsmessvorrichtung 7 und der ersten hinteren Ecke 43a. Der zweite Abstand b ist der Abstand zwischen dem fahrerlosen Transportfahrzeug 40 und der zweiten hinteren Ecke 42a bzw. zwischen der Abstandsmessvorrichtung 7 und der zweiten hinteren Ecke 43a.

Im Falle des vorliegenden Ausführungsbeispiels ist es vorgesehen, dass das fahrerlose Transportfahrzeug 40 automatisch derart in den Autoklav 41 hinein fährt, dass das fahrerlose Transportfahrzeug 40 eine Zielposition Z erreicht. Das fahrerlose Transportfahrzeug 40 ist also derart ausgeführt, dass es automatisch an die vorbestimmte Zielposition Z relativ zum Autoklav 41 fährt und insbesondere an dieser Zielposition Z auch eine vorbestimmte Orientierung relativ zum Autoklav 41 einnimmt. Dies erfolgt im Falle des vorliegenden Ausführungsbeispiels wie folgt:

Zunächst wird das fahrerlose Transportfahrzeug 40 vor die Öffnung 45 des Autoklavs 41 bewegt, indem es vorzugsweise automatisch eine vorbestimmte Position anfährt. Diese Position fährt das fahrerlose Transportfahrzeug 40 z.B. mittels eines auf der Steuervorrichtung 6 konfigurierten Planers an. Die vorbestimmte Position ist derart gewählt, dass das fahrerlose Transportfahrzeug 40 mittels seiner Abstandsmessvorrichtung 7 zwei charakteristische Merkmale des Autoklavs 41 erkennen kann. Die beiden charakteristischen Merkmale sind im Falle des vorliegenden Ausführungsbeispiels die beiden hinteren Ecken 42a, 43a.

An der Position angekommen, sucht automatisch das fahrerlose Transportfahrzeug 40 mittels seiner Abstandsvorrichtung 7 die beiden charakteristischen Merkmale, im Falle des vorliegenden Ausführungsbeispiels also die beiden hinteren Ecken 42a, 43a, und bestimmt den ersten Abstand a und den zweiten Abstand b, also die Abstände zu den beiden hinteren Ecken 42a, 43a. Dadurch kann auch der Abstand $h_c$ des fahrerlosen Transportfahrzeugs 1 zur Rückwand 44 ermittelt werden.

Aufgrund des ersten Abstands a, des zweiten Abstands b des Abstands c zwischen den beiden Seitenwänden 42, 43 wird es im Falle des vorliegenden Ausführungsbeispiels der Steuervorrichtung 7 ermöglicht, den Versatz $x_{offset}$ in x-Richtung und den Versatz $y_{offset}$ in y-Richtung der aktuellen Position des fahrerlosen Transportfahrzeugs 1 relativ zur gewünschten Zielposition P zu ermitteln.

Anhand der Längenunterschiede des ersten Abstands a und des zweiten Abstands b ermittelt nun die Steuervorrichtung 7 die einzunehmende Fahrtrichtung, welche das fahrerlose Transportfahrzeug 40 einnehmen soll, um die Zielposition Z zu erreichen. Dabei wird im Falle des vorliegenden Ausführungsbeispiels einer Geradeausbewegung des fahrerlosen Transportfahrzeugs 1 (translatorische Bewegung) eine erste rotatorische Bewegung überlagert, entsprechend der automatischen Bewegung des fahrerlosen Transportfahrzeugs 1. Die Größe des eben genannten Längenunterschieds bestimmt dabei, welches Ausmaß die erste rotatorische Bewegung annehmen soll. Im Falle des vorliegenden Ausführungsbeispiels wird die erste rotatorische Bewegung nach einer vorbestimmten ersten Zeitdauer Zeit ins Gegenteil verkehrt, d.h. die Richtung der rotatorischen Bewegung wird geändert.

Im Falle des vorliegenden Ausführungsbeispiels weist die tranlatorische Bewegung des fahrerlosen Transportfahrzeugs 40 eine konstante Geschwindigkeit $v_{trans}$ auf. Die Geschwindigkeit $v_{rot}$ der ersten rotatorischen Bewegung hängt im Falle des vorliegenden Ausführungsbeispiels vom Abstand $h_c$ des fahrerlosen Transportfahrzeugs 1 zur Rückwand 44 und von dem Versatz $y_{off-set}$ in y-Richtung der aktuellen Position des fahrerlosen Transportfahrzeugs 1 relativ zur gewünschten Zielposition Z ab. Insbesondere ist die Geschwindigkeit $v_{rot}$ der ersten rotatorischen Bewegung um so größer, je größer der Abstand $h_c$ des fahrerlosen Transportfahrzeugs 1 zur Rückwand 44 und je größer der Versatz $y_{offset}$ in y-Richtung der aktuellen Position des fahrerlosen Transportfahrzeugs 1 relativ zur gewünschten Zielposition Z ist. Die Anfangsrichtung der ersten rotatorischen Bewegung hängt vom aktuellen Versatz $y_{offset}$ in y-Richtung der aktuellen Position des fahrerlosen Transportfahrzeugs 1 relativ zur gewünschten Zielposition Z und gegebenenfalls auch von der aktuellen Orientierung des fahrerlosen Transportfahrzeugs 1 ab. Insbesondere ist es vorgesehen, dass das fahrerlose Transportfahrzeug 40 sich zunächst mit der überlagerten ersten rotatorischen Bewegung gegen den Uhrzeigersinn bewegt, wenn in Blickrichtung zur Rückwand 44 sich das fahrerlose Transportfahrzeug 40 rechts versetzt in y-Richtung zur Zielposition Z befindet. Anderenfalls bewegt sich das fahrerlose Transportfahrzeug 40 zunächst mit der überlagerten rotatorischen Bewegung gegen den Uhrzeigersinn. Nach der ersten Zeitdauer fährt das fahrerlose Transportfahrzeug 40 für eine zweite Zeitdauer mit der translatorischen Bewegung weiter, da eine zweite rotatorische Bewegung überlagert ist, deren Richtung entgegen der Richtung der ersten rotatorischen Bewegung zeigt.

**Patentansprüche**

1.  Verfahren zum Betreiben eines fahrerlosen Transportfahrzeugs (1, 40), welches automatisch eine Zielposition (Z) relativ zu einem Objekt (10, 41) anfahren soll, wobei das Objekt (10, 41) zwei charakteristische Merkmale (14a, 15a, 42a, 43a) aufweist und die Zielposition (Z) auf der Verbindungslinie zwischen den beiden charakteristischen Merkmalen (14a, 15a, 42a, 43a) oder beabstandet um einen Abstand (A) von dieser Verbindungslinie liegt, aufweisend folgende Verfahrensschritte:

    a) Bewegen des fahrerlosen Transportfahrzeugs (1, 40) an eine Position, an der das fahrerlose Transportfahrzeug (1, 40) mittels einer Abstandsmessvorrichtung (7) des fahrerlosen Transportfahrzeugs (1, 40) einen ersten Abstand (a) zwischen der aktuellen Position des fahrerlosen Transportfahrzeugs (1, 40) und dem ersten charakteristischen Merkmal (14a, 42a) und einen zweiten Abstand (b) zwischen der aktuellen Position des fahrerlosen Transportfahrzeugs (1, 40) und dem zweiten charakteristischen Merkmal (15a, 43a) zu bestimmen vermag,

b) mittels der Abstandsmessvorrichtung (7), Ermitteln des ersten Abstands (a) und des zweiten Abstands (b), danach

c) automatisches Fahren des fahrerlosen Transportfahrzeugs (1, 40) für eine vorbestimmte erste Zeitdauer mit einer translatorischen Bewegung, der eine erste rotatorische Bewegung überlagert ist, wobei die Richtung der ersten rotatorischen Bewegung vom ersten Abstand (a) und dem zweiten Abstand (b) abhängt,

d) nachdem die erste Zeitdauer verstrichen ist, automatisches Fahren des fahrerlosen Transportfahrzeugs (1, 40) für eine vorbestimmte zweite Zeitdauer mit der translatorischen Bewegung, der eine zweite rotatorische Bewegung überlagert ist, deren Richtung umgekehrt zur ersten rotatorischen Bewegung ausgerichtet ist, und

e) Wiederholen der Schritte b) bis d) solange, bis eine Abbruchbedingung erfüllt ist, bei welcher als Abbruchkriterium die Längen des ersten Abstands (a) und des zweiten Abstands (b) auf einem Kreis mit dem Radius r um den Mittelpunkt M des fahrerlosen Transportfahrzeugs (1, 40) und durch den Mittelpunkt der Abstandsmessvorrichtung (7) definiert sind, wobei das fahrerlose Transportfahrzeug (1, 40) automatisch stoppt, wenn die Kreisgleichung

$$r2 = x^2 + y^2$$

für einen ersten Soll-Versatz x=$x_{offset,soll}$ und einen zweiten Soll-Versatz y=$y_{offset,soll}$ erfüllt ist, wobei der erste Soll-Versatz ein maximal zulässiger Versatz des fahrerlosen Transportfahrzeugs (1, 40) zur Zielposition (Z) parallel zur Verbindungslinie und der zweite Soll-Versatz ein maximal zulässiger Versatz des fahrerlosen Transportfahrzeugs (1, 40) zur Zielposition (Z) rechtwinklig zur Verbindungslinie darstellt.

2. Verfahren nach Anspruch 1, bei dem die erste Zeitdauer gleich der zweiten Zeitdauer ist und/oder die Geschwindigkeit der translatorischen Geschwindigkeit konstant ist, und/oder bei dem der Abstand zwischen dem Zielpunkt (Z) und dem ersten charakteristischen Merkmal (14a, 42a) gleich dem Abstand zwischen dem Zielpunkt (Z) und dem zweiten charakteristischen Merkmal (14b, 42b) ist.

3. Verfahren nach Anspruch 1 oder 2, aufweisend Ermitteln eines ersten Versatzes $y_{offset}$ der aktuellen Position des fahrerlosen Transportfahrzeugs (1, 40) zur Zielposition (Z) in Richtung der Verbindungslinie und Wählen der Richtung der ersten rotatorischen Bewegung in Abhängigkeit des ermittelten ersten Versatzes $y_{offset}$ derart, dass diese in Richtung der Zielposition (Z) gerichtet ist.

4. Verfahren nach einem der Ansprüche 1 bis 3, bei dem die Geschwindigkeit der ersten rotatorischen Bewegung und/oder der zweiten rotatorischen Bewegung Geschwindigkeit der zweiten rotatorischen Bewegung von der Größe des ersten Versatzes $y_{offset}$ und /oder des Abstands ($h_c$) des fahrerlosen Transportfahrzeugs (1, 40) zur Verbindungslinie abhängt.

5. Verfahren nach Anspruch 4, bei dem die Geschwindigkeit der ersten rotatorischen Bewegung und/und der zweiten rotatorischen Bewegung von der Orientierung des fahrerlosen Transportfahrzeugs (1, 40) an der aktuellen Position relativ zur Zielposition (Z) abhängt.

6. Verfahren nach einem der Ansprüche 1 bis 5, bei dem das Objekt als ein Lastanhänger (10) ausgeführt ist, welcher eine Aufnahmevorrichtung (13) umfasst, welche vorgesehen ist, mit einer Gegenaufnahmevorrichtung des fahrerlosen Transportfahrzeugs (1) lösbar verbunden zu werden, wobei der Lastanhänger (10) zwei in Längsrichtung des Lastanhängers (10) ausgerichtete vertikale Streben (14, 15) aufweist, deren der Aufnahmevorrichtung (13) zugewandten Kanten (14a, 15a) die beiden charakteristischen Merkmale bilden.

7. Verfahren nach Anspruch 6, bei dem die Position der Aufnahmevorrichtung (13) der Zielposition zugeordnet ist.

8. Verfahren nach einem der Ansprüche 1 bis 5, bei dem das Objekt als ein Autoklav (41) ausgebildet ist, welcher eine Rückwand (44), eine erstes Seitenwand (42) und eine zur ersten Seitenwand parallele zweite Seitenwand (43) aufweist, wobei die Rückwand (44) rechtwinklig zu den Seitenwänden (42, 43) ausgerichtet ist, die erste Seitenwand (42) und die Rückwand (44) eine erste hintere Ecke (42a) und die zweite Seitenwand (43) und die Rückwand (44) eine zweite hintere Ecke (43a) bilden, die der Rückwand (44) abgewandten vorderen Kanten der beiden Seitenwände (42, 43) eine Öffnung (45) des Autoklavs (41) bilden, durch die das fahrerlose Transportfahrzeug (40) automatisch in den Autoklav (41) hinein fährt und die beiden hinteren Ecken (42a, 43 a) die beiden charakteristischen Merkmale bilden.

9. Fahrerloses Transportfahrzeug, aufweisend einen Fahrzeuggrundkörper (2), am Fahrzeuggrundkörper (2) angeordnete Räder (3, 4, 4a), von denen wenigstens einem der Räder (4) ein Antrieb (5, 5a) zugeordnet ist, eine Abstandsmessvorrichtung (7) und eine mit der Abstandsmessvorrichtung (7) und dem Antrieb (5, 5a) verbundene Steuervorrichtung (6), **dadurch gekennzeichnet, dass** die Steuervorrichtung (6) eingerichtet ist, das Verfahren nach einem der Ansprüche 1 bis 8 durchzuführen.

10. Fahrzeuganordnung, aufweisend

- ein fahrerloses Transportfahrzeug (1), das einen Fahrzeuggrundkörper (2), am Fahrzeuggrundkörper (2) angeordnete Räder (3, 4), von denen wenigstens einem der Räder (4) ein Antrieb (5) zugeordnet ist, eine Abstandsmessvorrichtung (7) und eine mit der Abstandsmessvorrichtung (7) und dem Antrieb (5) verbundene Steuervorrichtung (6), **dadurch gekennzeichnet, dass** die Steuervorrichtung (6) eingerichtet ist, das Verfahren nach Anspruch 6 oder 7 durchzuführen, und
- die Fahrzeuganordnung einen als das Objekt ausgeführten Lastanhänger (10) aufweist, welcher eine Aufnahmevorrichtung (13) umfasst, welche vorgesehen ist, mit einer Gegenaufnahmevorrichtung des fahrerlosen Transportfahrzeugs (1) lösbar verbunden zu werden, wobei der Lastanhänger zwei in Längsrichtung des Lastanhängers ausgerichtete vertikale Streben (14, 15) aufweist, deren der Aufnahmevorrichtung (13) zugewandten Kanten (14a, 15a) die beiden charakteristischen Merkmale bilden.

11. Bestückungsvorrichtung mit einem Autoklav, aufweisend

- ein fahrerloses Transportfahrzeug (40), das einen Fahrzeuggrundkörper (2), am Fahrzeuggrundkörper (2) angeordnete Räder (4a), von denen wenigstens einem der Räder (4a) ein Antrieb (5a) zugeordnet ist, eine Abstandsmessvorrichtung (7) und eine mit der Abstandsmessvorrichtung (7) und dem Antrieb (5a) verbundene Steuervorrichtung (6), die eingerichtet ist, das Verfahren nach Anspruch 8 durchzuführen, und
- einen als das Objekt ausgeführten Autoklav (41), welcher eine Rückwand (44), eine erste Seitenwand (42) und eine zur ersten Seitenwand (42) parallele zweite Seitenwand (43) aufweist, wobei die Rückwand (44) rechtwinklig zu den Seitenwänden (42, 43) ausgerichtet ist, die erste Seitenwand (42) und die Rückwand (44) eine erste hintere Ecke (42a) und die zweite Seitenwand (43) und die Rückwand (44) eine zweite hintere Ecke (43) bilden, die der Rückwand (44) abgewandten vorderen Kanten der beiden Seitenwände (42, 43) eine Öffnung (45) des Autoklavs (41) bilden, durch die das fahrerlose Transportfahrzeug (40) automatisch in den Autoklav (41) hinein fährt und die beiden hinteren Ecken (42a, 43a) die beiden charakteristischen Merkmale bilden.

**Claims**

1. Method for operating a driverless transport vehicle (1, 40) which is to be moved automatically to a target position (Z) relative to an object (10, 41), wherein the object (10, 41) has two characteristic features (14a, 15a, 42a, 43a) and the target position (Z) lies on the connecting line between the two characteristic features (14a, 15a, 42a, 43a) or is located at a distance (A) from this connecting line, comprising the following method steps:

(a) moving the driverless transport vehicle (1, 40) to a position at which the driverless transport vehicle (1, 40) is capable of determining, by means of a distance measuring device (7) of the driverless transport vehicle (1, 40), a first distance (a) between the current position of the driverless transport vehicle (1, 40) and the first characteristic feature (14a, 42a) and a second distance (b) between the current position of the driverless transport vehicle (1, 40) and the second characteristic feature (15a, 43a),
(b) determining the first distance (a) and the second distance (b) by means of the distance measuring device (7), then
(c) automatically moving the driverless transport vehicle (1, 40) for a predetermined first time period in a translational movement, onto which a first rotational movement is superposed, wherein the direction of the first rotational movement depends on the first distance (a) and the second distance (b),
(d) following expiration of the first time interval, automatically moving the driverless transport vehicle (1, 40) for a predetermined second time interval with the translational movement, onto which a second rotational movement is superposed, the direction of which is inverse to the first rotational movement, and
(e) repeating steps (b) to (d) until a termination condition is satisfied, wherein the termination criterion is defined by the lengths of the first distance (a) and the second distance (b) on a circle with a radius (r) around the centre point (M) of the driverless transport vehicle (1, 40) and through the centre point of the distance measuring device (7), wherein the driverless transport vehicle (1, 40) stops automatically when the equation of the circle:

$$r2 = x^2 + y^2$$

is satisfied for a first desired offset $x=x_{offset,desired}$ and a second desired offset $y=y_{offset,desired}$, wherein the first desired offset represents a maximum allowed offset of the driverless transport vehicle (1, 40) to the target position (Z) parallel to the connecting line, and the second desired offset represents a maximum allowed offset of the driverless transport vehicle (1, 40) to the target position (Z) perpendicular to the connecting line.

2. Method according to claim 1, wherein the first time period is equal to the second time period and/or the speed of the translational movement is constant and/or the distance between the target point (Z) and the first characteristic feature (14a, 42a) is equal to the distance between the target point (Z) and the second characteristic feature (14b, 42b).

3. Method according to claim 1 or 2, comprising determining a first offset $y_{offset}$ between the current position of the driverless transport vehicle (1, 40) to the target position (Z) in the direction of the connecting line and selecting the direction of the first rotational movement as a function of the determined first offset $y_{offset}$ such that the latter is aligned in the direction of the target position (Z).

4. Method according to any of claims 1 to 3, wherein the speed of the first rotational movement and/or the second rotational movement speed of the second rotational movement depends on the magnitude of the first offset $y_{offset}$ and/or the distance ($h_c$) of the driverless transport vehicle (1, 40) from the connecting line.

5. Method according to claim 4, wherein the speed of the first rotational movement and/or the second rotational movement depends on the orientation of the driverless transport vehicle (1, 40) in the current position relative to the target position (Z).

6. Method according to any of claims 1 to 5, wherein the object is in the form of a load trailer (10) comprising a mounting device (13) which is provided to be releasably connected to a corresponding coupling device of the driverless transport vehicle (1), wherein the load trailer (10) comprises two vertical rods (14, 15) extending in a longitudinal direction of the load trailer (10), which edges (14a, 15a) facing the mounting device (13) form the two characteristic features.

7. Method according to claim 6, wherein the position of the mounting device (13) is associated with the target position.

8. Method according to any of claims 1 to 5, wherein the object is in the form of an autoclave (41), which has a rear wall (44), a first side wall (42) and a second side wall (43) parallel to the first side wall, wherein the rear wall (44) is aligned perpendicular to the side walls (42, 43), the first side wall (42) and the rear wall (44) form a first rear corner (42a) and the second side wall (43) and the rear wall (44) form a second rear corner (43a), and the front edges of the two side walls (42, 43) which are directed away from the rear wall (44) form an opening (45) of the autoclave (41), through which the driverless transport vehicle (40) is automatically moved into the autoclave (41) and the two rear corners (42a, 43a) form the two characteristic features.

9. Driverless transport vehicle, comprising a vehicle base body (2), wheels (3, 4, 4a) arranged on the vehicle base body (2), a drive (5, 5a) being is assigned to at least one of the wheels (4), a distance measuring device (7) and a control device (6) connected to the distance measuring device (7) and the drive (5, 5a), **characterised in that** the control device (6) is configured to perform the method according to any of claims 1 to 8.

10. Vehicle arrangement, comprising

- a driverless transport vehicle (1) comprising a vehicle base body (2), wheels (3, 4) arranged on the vehicle base body (2), a drive (5a) being assigned to at least one of the wheels (4a), a distance measuring device (7) and a control device (6) connected to the distance measuring device (7) and the drive (5), **characterised in that** the control device (6) is configured to perform the method according to claim 6 or 7, and
- the vehicle arrangement has a load trailer (10) designed as the object, which comprises a mounting device (13) which is configured to be releasably connected to a corresponding coupling device of the driverless transport vehicle (1), wherein the load trailer comprises two vertical rods (14, 15) extending in a longitudinal direction of the load trailer, of which edges (14a, 15a) facing the mounting device (13) form the two characteristics features.

11. Fitting system with an autoclave, comprising:

- a driverless transport vehicle (40), which has a vehicle base body (2), wheels (4a) arranged on the vehicle base body (2), a drive (5a) being assigned to at least one of the wheels (4a), a distance measuring device (7) and a control device (6) connected to the distance measuring device (7) and the drive (5a), which is configured to perform the method according to claim 8, and
- an autoclave (41) designed as the object, which has a rear wall (44), a first side wall (42) and a second side wall (43) parallel to the first side wall (42), wherein the rear wall (44) is aligned perpendicular to the side walls (42, 43), the first side wall (42) and the rear wall (44) form a first rear corner (42a) and the second side wall (43) and the rear wall (44) form a second rear corner (43), and the front edges of the two side walls (42, 43) which are directed away from the rear wall (44) form an opening (45) of the autoclave (41), through which the driverless transport vehicle (40) is automatically moved into the autoclave (41) and the two rear corners (42a, 43b) form the two characteristic features.

**Revendications**

1. Procédé pour faire fonctionner un véhicule de transport sans conducteur (1, 40) qui doit s'approcher automatiquement d'une position cible (Z) par rapport à un objet (10, 41), dans lequel l'objet (10, 41) présente deux éléments caractéristiques (14a, 15a, 42a, 43a), et la position cible (Z) se trouve sur la ligne de liaison entre les deux éléments caractéristiques (14a, 15a, 42a, 43a) ou à une distance (A) de cette ligne de liaison, présentant les étapes de procédé suivantes :

a) déplacement du véhicule de transport sans conducteur (1, 40) vers une position à laquelle le véhicule de transport sans conducteur (1, 40) est capable de déterminer une première distance (a) entre la position actuelle du véhicule de transport sans conducteur (1, 40) et le premier élément caractéristique (14a, 42a) et une deuxième distance (b) entre la position actuelle du véhicule de transport sans conducteur (1, 40) et le deuxième élément caractéristique (15a, 43a), au moyen d'un dispositif de mesure de distance (7) du véhicule de transport sans conducteur (1, 40),
b) détermination de la première distance (a) et de la deuxième distance (b) au moyen du dispositif de mesure de distance (7), ensuite,

c) conduite automatique du véhicule de transport sans conducteur (1, 40) pendant une première période de temps prédéterminée avec un mouvement de translation auquel est superposé un premier mouvement de rotation, la direction du premier mouvement de rotation dépendant de la première distance (a) et de la deuxième distance (b),
d) après l'écoulement de la première période de temps, conduite automatique du véhicule de transport sans conducteur (1, 40) pendant une deuxième période de temps prédéterminée avec le mouvement de translation, auquel est superposé un deuxième mouvement de rotation dont la direction est orientée dans le sens inverse au premier mouvement de rotation, et
e) répétition des étapes b) à d) jusqu'à ce qu'une condition d'interruption soit remplie, dans laquelle à titre de critère d'interruption, les longueurs de la première distance (a) et de la deuxième distance (b) sont définies sur un cercle de rayon r autour du centre M du véhicule de transport sans conducteur (1, 40) et par le centre du dispositif de mesure de distance (7), le véhicule de transport sans conducteur (1, 40) s'arrêtant automatiquement lorsque l'équation de cercle

$$r2 = x^2 + y^2$$

est satisfaite pour un premier décalage de consigne x=$x_{offset,soll}$ et pour un deuxième décalage de consigne y=$y_{offset,soll}$, le premier décalage de consigne constituant un décalage maximal admissible du véhicule de transport sans conducteur (1, 40) vers la position cible (Z) parallèlement à la ligne de liaison et le deuxième décalage constituant un décalage maximal admissible du véhicule de transport sans conducteur (1, 40) par rapport à la position cible (Z), perpendiculairement à la ligne de liaison.

2. Procédé selon la revendication 1, dans lequel la première durée est égale à la deuxième durée et/ou la vitesse de la vitesse de translation est constante, et/ou dans lequel la distance entre le point cible (Z) et le premier élément caractéristique (14a, 42a) est égale à la distance entre le point cible (Z) et le deuxième élément caractéristique (14b, 42b).

3. Procédé selon la revendication 1 ou 2, comprenant la détermination d'un premier décalage $y_{offset}$ de la position actuelle du véhicule de transport sans conducteur (1, 40) par rapport à la position cible (Z) dans la direction de la ligne de liaison et la sélection de la direction du premier mouvement de rotation en fonction du premier décalage $y_{offset}$ déterminé, de telle sorte qu'il soit dirigé dans la direction de la position cible (Z).

4.  Procédé selon l'une des revendications 1 à 3, dans lequel la vitesse du premier mouvement de rotation et/ou la vitesse du deuxième mouvement de rotation dépend de la taille du premier décalage $y_{offset}$ et/ou de la distance ($h_c$) du véhicule de transport sans conducteur (1, 40) par rapport à la ligne de liaison.

5.  Procédé selon la revendication 4, dans laquelle la vitesse du premier mouvement de rotation et/ou du deuxième mouvement de rotation dépend de l'orientation du véhicule de transport sans conducteur (1, 40) à la position actuelle par rapport à la position cible (Z).

6.  Procédé selon l'une des revendications 1 à 5, dans lequel l'objet est réalisé en tant que remorque de chargement (10) qui comprend un dispositif de réception (13) qui est prévu pour être relié de manière amovible avec un dispositif de réception complémentaire du véhicule de transport sans conducteur (1), la remorque de chargement (10) présentant deux montants verticaux (14, 15) orientés en direction longitudinale de la remorque de chargement (10) dont les bords (14a, 15a) tournés vers le dispositif de réception (13) forment les deux éléments caractéristiques.

7.  Procédé selon la revendication 6, dans laquelle la position du dispositif de réception (13) est associée à la position cible.

8.  Procédé selon l'une des revendications 1 à 5, dans lequel l'objet est réalisé en tant qu'autoclave (41) qui présente une paroi arrière (44), une première paroi latérale (42) et une deuxième paroi latérale (43) parallèle à la première paroi latérale, dans lequel la paroi arrière (44) est orientée perpendiculairement aux parois latérales (42, 43), la première paroi latérale (42) et la paroi arrière (44) formant un premier coin arrière (42a), et la deuxième paroi latérale (43) et la paroi arrière (44) formant un deuxième coin arrière (43a), les bords avant des deux parois latérales (42, 43), qui sont détournés de la paroi arrière (44), formant une ouverture (45) de l'autoclave (41) à travers laquelle le véhicule de transport sans conducteur (40) entre automatiquement dans l'autoclave (41), et les deux coins arrière (42a, 43a) formant les deux éléments caractéristiques.

9.  Véhicule de transport sans conducteur, comprenant un corps de base de véhicule (2), des roues (3, 4, 4a) agencées sur le corps de base de véhicule (2), dont au moins une des roues (3, 4, 4a) est associée à un entraînement (5, 5a), un dispositif de mesure de distance (7) et un dispositif de commande (6) relié au dispositif de mesure de distance (7) et à l'entraînement (5, 5a), **caractérisé en ce que** le dispositif de commande (6) est configuré pour exécuter le procédé selon l'une des revendications 1 à 8.

10. Agencement de véhicule présentant

    - un véhicule de transport sans conducteur (1) qui comprend un corps de base de véhicule (2), des roues (3, 4) agencées sur le corps de base de de véhicule (2), dont au moins une des roues (4) est associée à un entraînement (5), un dispositif de mesure de distance (7) et un dispositif de commande (6) relié au dispositif de mesure de distance (7) et à l'entraînement (5), **caractérisé en ce que** le dispositif de commande (6) est configuré pour exécuter le procédé selon la revendication 6 ou 7, et
    - l'agencement de véhicules présente une remorque de chargement (10) qui comprend un dispositif de réception (13) qui est prévu pour être relié de manière amovible à un dispositif de réception complémentaire du véhicule de transport sans conducteur (1), la remorque de chargement présentant deux montants verticaux (14, 15) orientés dans la direction longitudinale de la remorque de chargement et dont les bords (14a, 15a) tournés vers le dispositif de réception (13) forment les deux éléments caractéristiques.

11. Dispositif de chargement avec un autoclave, comprenant

    - un véhicule de transport sans conducteur (40) qui comprend un corps de base de véhicule (2), des roues (4a) agencées sur le corps de base de véhicule (2), dont au moins une des roues (4a) est associée à un entraînement (5a), un dispositif de mesure de distance (7) et un dispositif de commande (6) relié au dispositif de mesure de distance (7) et à l'entraînement (5a), qui est configuré pour exécuter le procédé selon la revendication 8, et
    - un autoclave (41) réalisé en tant que l'objet, qui présente une paroi arrière (44), une première paroi latérale (42) et une deuxième paroi latérale (43) parallèle à la première paroi latérale (42), la paroi arrière (44) étant orientée à angle droit par rapport aux parois latérales (42, 43), la première paroi latérale (42) et la paroi arrière (44) formant un premier coin arrière (42a), et la deuxième paroi latérale (43) et la paroi arrière (44) formant un deuxième coin arrière (43), les bords avant des deux parois latérales (42, 43) qui sont détournés de la paroi arrière (44), formant une ouverture (45) de l'autoclave (41) à travers laquelle le véhicule de transport sans conducteur (40) entre automatiquement dans l'autoclave (41) et les deux coins arrière (42a, 43a) formant les deux éléments caractéristiques.

# FIG. 1

# FIG. 3

FIG. 2

FIG. 4

FIG. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080199298 A1

- DE 102010012750 A1

**In der Beschreibung aufgeführte Nicht-Patentliteratur**

- **ROLAND STAHN et al.** Laser Scanner-Based Navigation for Commercial Vehicles. *INTELLIGENT VEHICLES SYMPOSIUM,* 2007